# EUROPÄISCHE PATENTSCHRIFT

(11) **EP 2 904 599 B1**
(45) Veröffentlichungstag und Bekanntmachung des Hinweises auf die Patenterteilung: **07.11.2018**
(21) Anmeldenummer: 13773592.4
(22) Anmeldetag: 03.09.2013
(51) Int. Cl.: G08G 1/16, B60W 10/18, B60W 10/20, B60W 30/00

(54) **VERFAHREN UND VORRICHTUNG ZUM UNTERSTÜTZEN DES ZURÜCKFÜHRENS EINES FAHRZEUGS NACH DEM VERLASSEN EINER FAHRBAHN**
METHOD AND DEVICE FOR SUPPORTING THE RETURN OF A VEHICLE AFTER LEAVING A LANE
PROCÉDÉ ET DISPOSITIF PERMETTANT D'ASSISTER LE RENVOI D'UN VÉHICULE SUR UNE CHAUSSÉE QU'IL VIENT DE QUITTER

(30) Priorität: 01.10.2012 DE 102012109310
(43) Veröffentlichungstag der Anmeldung: 12.08.2015
(73) Patentinhaber: Conti Temic Microelectronic GmbH, 90411 Nürnberg (DE)
(72) Erfinder: ULBRICHT, Dirk, 88239 Wangen (DE)
(86) Internationale Anmeldenummer: PCT/DE2013/200148
(87) Internationale Veröffentlichungsnummer: WO 2014/053127

(56) Entgegenhaltungen:
- WO-A1-2005/013235

## Beschreibung

Die Erfindung betrifft ein Verfahren und eine Vorrichtung zum Unterstützen des Zurückführens eines Fahrzeugs nach dem Verlassen einer Fahrbahn, die insbesondere für ein Fahrerassistenzsystem geeignet sind.

Zwischen dem Belag einer Fahrbahn und dem unbefestigten Seitenstreifen einer Straße bzw. dem Bankett (hierin auch als Fahrbahn-Randbereich bezeichnet) kann sich mit der Zeit teilweise durch Erosion eine Stufe ausbilden. Gerät ein Fahrzeug mit den Rädern einer Fahrzeugseite an derartigen Stellen auf das Bankett, wird das Fahrzeug beim Zurückführen auf die Fahrbahn häufig oft instabil, da viele Fahrer versuchen, mit großem Lenkwinkel das Fahrzeug auf die Fahrbahn zu steuern, und das Fahrzeug dem Lenkwinkel schlagartig folgt, sobald es wieder auf der Fahrbahn ist, oder der Reifen durch eine durch die Stufe gebildete Kante beschädigt wurde und die Luft verloren hat. Es gibt zwar Systeme, die ein ungewolltes Verlassen eines Fahrsteifens einer Fahrbahn verhindern sollen, sogenannte Spurhalteassistenten (lane keeping assistants). Diese Systeme können aber in der Regel vom Fahrer überstimmt werden, um z.B. das Ausweichen vor einem Hindernis zu ermöglichen, und daher nicht verhindern, dass das Fahrzeug in die oben erwähnte Situation beim Überfahren einer Stufe zwischen Fahrbahn und Bankett gerät. Für genau solche Situationen wäre daher eine Unterstützung eines Fahrers wünschenswert, vor allem, um zu verhindern, dass das Fahrzeug beim Zurückführen insbesondere durch das Überfahren einer zu hohen Stufe zwischen Fahrbahn und Bankett instabil wird.

Aus der WO 2005/013235 A1 ist eine Vorrichtung zur Klassifizierung von Objekten bekannt, die die Objekte anhand ihrer Form und ihrer Abmessung ermittelt. Zusätzlich kann eine Geschwindigkeit der Objekte bei der Klassifizierung berücksichtigt werden. Die Plausibilität der Klassifizierung wird im Anschluss mittels Daten aus einer 'Datenbank verifiziert.

Aufgabe der vorliegenden Erfindung ist es daher, ein Verfahren und eine Vorrichtung zum Unterstützen des Zurückführens eines Fahrzeugs nach dem Verlassen einer Fahrbahn vorzuschlagen, die insbesondere für ein Fahrerassistenzsystem geeignet sind.

Diese Aufgabe wird durch die Gegenstände der unabhängigen Ansprüche gelöst. Weitere Ausgestaltungen der Erfindung ergeben sich aus den abhängigen Ansprüchen.

Um Instabilitäten beim Zurückführen eines Fahrzeugs von einem Randbereich einer Fahrbahn auf die Fahrbahn zu verringern oder gar zu verhindern, könnte die Geschwindigkeit des Fahrzeugs deutlich reduziert werden, bevor das Fahrzeug auf die Fahrbahn zurückgelenkt wird, oder das Fahrzeug könnte an einer Stelle wieder auf die Fahrbahn gelenkt werden, an welcher ein Unterschied zwischen dem Fahrbahn-Randbereich und der Fahrbahn möglichst gering ist, beispielsweise ein Höhenunterschied zwischen Randbereich und Fahrbahn deutlich geringer ist oder der Randbereich deutlich schmaler ist als an anderen Stellen. In den vergangenen Jahren wurden in Fahrzeugen vermehrt Fahrerassistenzsysteme mit Umfeldsensoren wie Kameras oder bildgebende Radars eingesetzt, mit denen der Raum vor dem Fahrzeug überwacht werden kann und die Fahrbahn nach Markierungen abgesucht und hinsichtlich ihrer Kontur vermessen werden kann. Ein der Erfindung zugrunde liegender Gedanke besteht nun darin, die von derartigen Umfeldsensoren erzeugten Daten auszuwerten, um ein Rückführsignal zum Unterstützen des Zurückführens des Fahrzeugs auf die Fahrbahn zu generieren. Das Rückführsignal kann dann beispielsweise als rein passive Hilfe zur Unterstützung eines Fahrers beim Zurückführen dienen, oder aber weiter verarbeitet werden, um Signale für die Steuerung eines teilautonomen oder gar autonomen Zurückführens mittels eines entsprechenden Systems zu erzeugen, wodurch es aktiv das Rückführen unterstützt. Praktisch wird anhand der Daten von Umfeldsensoren ein Übergang zwischen der Fahrbahn und einem Randbereich der Fahrbahn ermittelt. Dann wird bewertet, wie dieser Übergang das Zurückführen des Fahrzeugs auf die Fahrbahn beeinflusst. Anhand dieser Bewertung kann bei Vorliegen eines zum Zurückführen ausreichend großen Freiraums vor dem Fahrzeug ein Rückführsignal erzeugt werden, das dann beispielsweise zur Signalisierung an einen Fahrer oder für (teil) autonome Eingriffe in die Antriebssteuerung wie eine automatische (einseitige) Bremsung, gezieltes Beschleunigen und/oder Lenkeingriffe weiter verwendet werden kann.

Eine Ausführungsform der Erfindung betrifft nun ein Verfahren zum Unterstützen des Zurückführens eines Fahrzeugs nach dem Verlassen einer Fahrbahn mit den folgenden Schritten:
Empfangen von Daten eines oder mehrerer Umfeldsensoren des Fahrzeugs,
welche die Fahrbahn in einem Bereich vor dem Fahrzeug erfassen, Auswerten der empfangenen Daten zum Erkennen eines Übergangs
zwischen der Fahrbahn und einem Fahrbahn-Randbereich, wobei das Auswerten das Erkennen eines Höhenunterschieds zwischen dem Fahrbahn-Randbereich und der Fahrbahn und/oder einer Breite des Fahrbahn-Randbereichs aufweist,
Auswerten der empfangenen Daten zum Erkennen eines Freiraums vor dem Fahrzeug,
Prüfen, ob der erkannte Übergang für ein Zurückführen des Fahrzeugs auf die Fahrbahn unkritisch ist und Ausgeben eines entsprechenden ersten Signals, wobei das Prüfen aufweist, ob mindestens der erkannte Höhenunterschied oder die erkannte Breite kleiner als ein vorgegebener Schwellwert ist,
Prüfen, ob der erkannte Freiraum für ein Zurückführen des Fahrzeugs ausreichend ist und Ausgeben eines entsprechenden zweiten Signals, und Erzeugen eines Rückführsignals, wenn das erste Signal signalisiert, dass der erkannte Übergang unkritisch ist, und das zweite Signal signalisiert, dass der Freiraum ausreichend ist.

Das Prüfen, ob der erkannte Übergang für ein Zurückführen des Fahrzeugs auf die Fahrbahn unkritisch ist, kann folgendes aufweisen:
Klassifizieren des erkannten Übergangs hinsichtlich seines Einflusses auf die Fahrstabilität beim Überfahren durch das Fahrzeug und
Ausgeben des ersten Signals, wenn der Übergang mit einem geringeren Einfluss auf die Fahrstabilität beim Überfahren als ein vorgegebener maximaler Einfluss klassifiziert ist.

Abhängig vom Rückführsignal kann bzw. können ein Lenkunterstützungssignal, ein Bremseingriffssignal und/oder ein Beschleunigungssignal erzeugt und ausgegeben werden.

Die von dem oder den Umfeldsensoren empfangenen Daten sollten insbesondere Informationen zum Erkennen und Bewerten einer Oberflächenkontur des Untergrunds vor dem Fahrzeug und des Freiraums vor dem Fahrzeug aufweisen.

Eine weitere Ausführungsform der Erfindung betrifft eine Vorrichtung zum Unterstützen des Zurückführens eines Fahrzeugs nach dem Verlassen der Fahrbahn mit einer Auswerteeinheit, die ausgebildet ist zum
Empfangen von Daten eines oder mehrerer Umfeldsensoren des Fahrzeugs, welche die Fahrbahn in einem Bereich vor dem Fahrzeug erfassen, Auswerten der empfangenen Daten zum Erkennen eines Übergangs zwischen der Fahrbahn und einem Fahrbahn-Randbereich, wobei das Auswerten das Erkennen eines Höhenunterschieds zwischen dem Fahrbahn-Randbereich und der Fahrbahn und/oder einer Breite des Fahrbahn-Randbereichs aufweist,
Auswerten der empfangenen Daten zum Erkennen eines Freiraums vor dem Fahrzeug,
Prüfen, ob der erkannte Übergang für ein Zurückführen des Fahrzeugs auf die Fahrbahn unkritisch ist, wobei das Prüfen aufweist, ob mindestens der erkannte Höhenunterschied oder die erkannte Breite kleiner als ein vorgegebener Schwellwert ist und Ausgeben eines entsprechenden ersten Signals,
Prüfen, ob der erkannte Freiraum für ein Zurückführen des Fahrzeugs ausreichend ist und Ausgeben eines entsprechenden zweiten Signals, und Erzeugen eines Rückführsignals, wenn das erste Signal signalisiert, der erkannte Übergang unkritisch ist, und das zweite Signal signalisiert, dass der Freiraum ausreichend ist.

Die, Auswerteeinheit kann ferner ausgebildet sein, ein Verfahren nach der Erfindung und wie hierin beschrieben auszuführen.

Schließlich betrifft eine Ausführungsform der Erfindung ein Fahrerassistenzsystem mit einer Vorrichtung nach der Erfindung und wie hierin beschrieben.

Das Fahrerassistenzsystem muss eine Signalisierungsvorrichtung aufweisen, die einem Fahrer ein erzeugtes Rückführsignal signalisiert.

Das Fahrerassistenzsystem kann ferner ausgebildet sein, abhängig vom Rückführsignal Steuersignale für die Antriebssteuerung und/oder Lenkung eines Fahrzeugs derart zu erzeugen, dass die Antriebssteuerung bzw. Lenkung das Fahrzeug teilautonom oder autonom auf eine Fahrbahn zurückführt.

Weitere Vorteile und Anwendungsmöglichkeiten der vorliegenden Erfindung ergeben sich aus der nachfolgenden Beschreibung in Verbindung mit dem/den in der/den Zeichnung(en) dargestellten Ausführungsbeispiel(en).

In der Beschreibung, in den Ansprüchen, in der Zusammenfassung und in der/den Zeichnung(en) werden die in der hinten angeführten Liste der Bezugszeichen verwendeten Begriffe und zugeordneten Bezugszeichen verwendet.

Die Zeichnung(en) zeigt/zeigen in
- Fig. 1: eine Draufsicht auf eine Situation, in der ein mit einem Umfeldsensor ausgestattetes Fahrzeug von der Fahrbahn abgekommen ist und teilweise auf dem Randbereich der Fahrbahn fährt;
- Fig. 2: ein Beispiel eines mit einer als Umfeldsensor eingesetzten Kamera erfassten Bildes einer Situation, in der das Fahrzeug mit der Kamera von der Fahrbahn abgekommen ist und teilweise auf dem Randbereich der Fahrbahn fährt;
- Fig. 3: ein Ablaufdiagramm eines Ausführungsbeispiel eines Algorithmus zum Unterstützen des Zurückführens eines Fahrzeugs nach dem Verlassen der Fahrbahn gemäß der Erfindung, der in einem Fahrerassistenzsystem implementiert ist; und
- Fig. 4: ein Blockschaltbild eines Ausführungsbeispiels einer Vorrichtung zum Unterstützen des Zurückführens eines Fahrzeugs nach dem Verlassen der Fahrbahn gemäß der Erfindung, die in einem Fahrerassistenzsystem eingesetzt werden kann.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

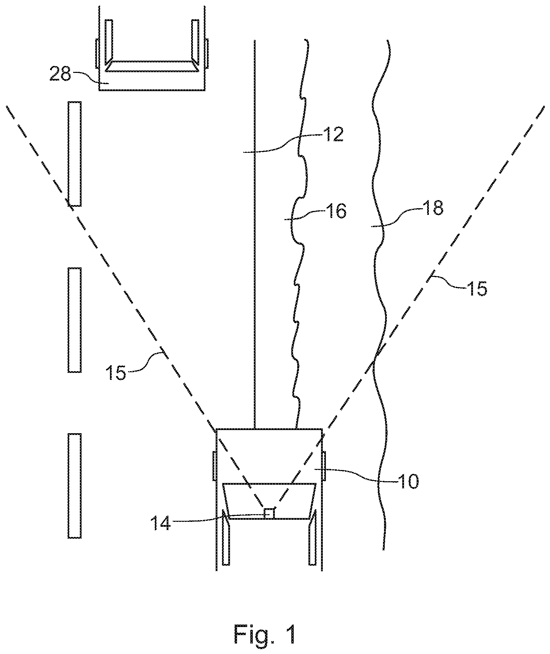

Fig. 1 zeigt ein Fahrzeug 10, das von einer Fahrbahn 12 einer Landstraße teilweise abgekommen ist und mit den Rädern seiner rechten Seite auf einem unbefestigten Randbereich 18 der Fahrbahn fährt. Die Fahrbahn 12 ist vom Randbereich 18 durch einen Übergang 16 getrennt, der sich beispielsweise durch Erosion gebildet haben kann und eine Stufe mit verschiedenen Höhenunterschieden zwischen der befestigten Fahrbahn 12 und dem unbefestigten Randbereich 18 bilden kann. Der Übergang 16 kann zudem unterschiedliche Breiten aufweisen, wie in Fig, 1 angedeutet ist.

Das Fahrzeug 10 ist mit einer Kamera 14 als Umfeldsensor zur Erfassung des Bereichs vor dem Fahrzeug 10 ausgestattet. Der Erfassungsbereich der Kamera 14 ist durch die gestrichelten Bezugslinien 15 angedeutet. Im Erfassungsbereich 15 der Kamera 14 befindet sich ein dem Fahrzeug 10 vorausfahrendes Fahrzeug 28. Anstelle einer Kamera können auch andere Arten von Umfeldsensoren eingesetzt werden. Als Umfeldsensoren eignen sich für die Zwecke der vorliegenden Erfindung vor allem Sensoren, die Informationen liefern,
- aus denen sich die Oberflächenkontur des Untergrunds vor dem Fahrzeug bewerten lässt und
- der Freiraum vor dem Fahrzeug erkennen oder bewerten lässt.
Insbesondere bildgebende Sensoren wie Stereokameras oder hochauflösende Radar- oder Lidarsensoren liefern solche Information und sind daher für die vorliegende Erfindung besonders geeignet. Für den auf Landstraßen üblichen Geschwindigkeitsbereich sollten die Informationen für den Bereich bis etwa min. 50 m vor dem Fahrzeug mit ausreichender Güte und Sicherheit zur Verfügung stehen. Wenn das Fahrzeug autonom agieren soll, empfiehlt es sich, in der Regel redundante Informationen und Auswertungen vorzusehen.

Mit Hilfe eines oder mehrere nach vorne, d.h. in Fahrtrichtung des Fahrzeugs 10 gerichteter Umfeldsensoren wird gemäß der vorliegenden Erfindung und im Folgenden ausführlicher beschrieben im Prinzip die Fahrbahnkontur vermessen oder geschätzt, um Informationen für ein Zurückführen des Fahrzeugs 10 auf die Fahrbahn 12 zu erhalten. Weiterhin wird der Raum vor dem Fahrzeug 10 nach Hindernissen wie dem vorausfahrenden Fahrzeug 28 oder Hindernissen auf dem Randbereich 18 und dem Übergang 16 wie beispielsweise Leitpfosten 28b abgesucht, die das Fahrzeug 10 beim Zurückführen auf die Fahrbahn 10 nicht treffen darf.

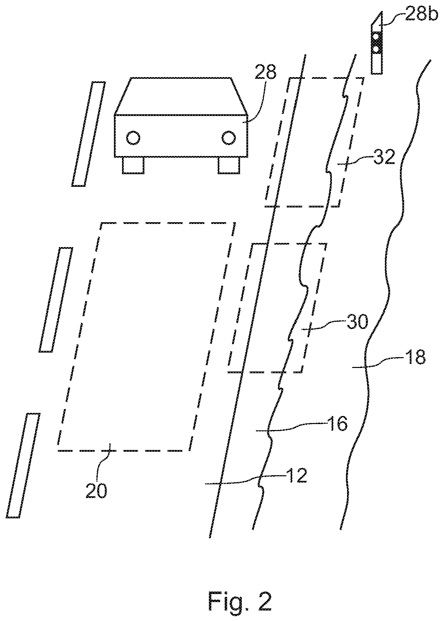

Fig. 2 zeigt ein von der Kamera 14 erfasstes Bild des Bereichs vor dem eigenen Fahrzeug 10. In dem erfassten Bild sind ein erkannter Freiraum 20 zwischen dem eigenen Fahrzeug und dem vorausfahrenden Fahrzeug 28 und eine erste und eine zweite als unkritisch für das Zurückführen des Fahrzeugs auf die Fahrbahn 12 bewertete Übergangsstellen 30 bzw. 32 durch gestrichelte Rechtecke (bounding boxes) gekennzeichnet, sowie das Hindernis auf dem Randstreifen 28b. Die Rechtecke 20, 30 und 32 werden durch die nachfolgend beschriebene algorithmische Bildauswertung gemäß der Erfindung erhalten.

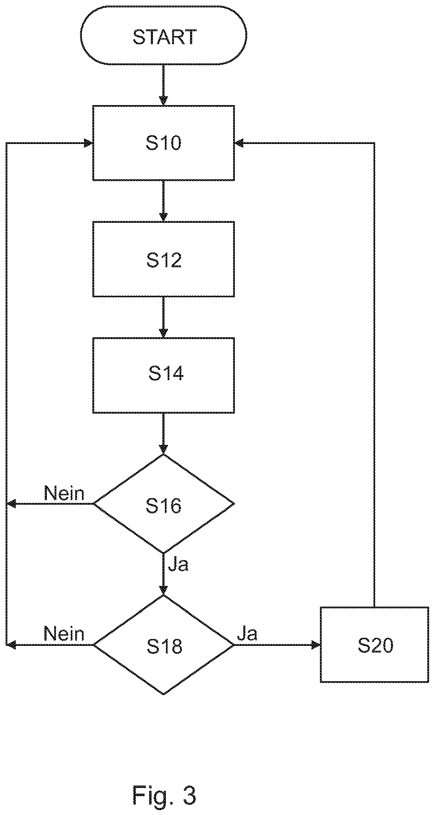

Fig. 3 zeigt ein Ablaufdiagramm eines Algorithmus zum Unterstützen des Zurückführens eines Fahrzeugs nach dem Verlassen der Fahrbahn gemäß der Erfindung, der die in Fig. 2 gekennzeichneten Rechtecke 20, 30 und 32 erzeugt. Der Algorithmus ist in einem Fahrerassistenzsystem als Teil der Betriebssoftware dieses Systems implementiert und verarbeitet von Umfeldsensoren wie der Kamera 14 erzeugte Daten mit Informationen zu dem vor einem Fahrzeug erfassten Bereich, wie er in Fig. 2 dargestellt ist. Nach dem Start des Algorithmus empfängt dieser in einem ersten Schritt S10 Daten von einem oder mehreren Umfeldsensoren, beispielsweise von der Kamera 14 des in Fig. 1 gezeigten Fahrzeugs 10. Die empfangen Daten wertet der Algorithmus hinsichtlich verschiedener charakteristischer Merkmale wie der Oberflächenkontur des Untergrunds vor dem Fahrzeug und Konturen vorausfahrender Fahrzeug aus. Im Rahmen dieser Auswertung werden anhand der charakteristischen Merkmale verschiedene Objekte wie in Fig. 2 dargestellt klassifiziert in Fahrbahn 12, Fahrbahn-Randbereich 18, vorausfahrendes Fahrzeug 28, Hindernisse im Fahrweg 28b.

In einem weiteren Schritt S12 werden die empfangenen Daten weiter ausgewertet, um einen Übergang 16 zwischen der Fahrbahn 12 und dem Fahrbahn-Randbereich 18 zu erkennen, was beispielsweise anhand typischer charakteristischer Merkmale wie Stufenbildung, farbliche Abweichungen, Oberflächenbeschaffenheit etc. erfolgen kann.

In einem darauffolgenden Schritt S14 wird ein Freiraum 20 auf der Fahrbahn zwischen dem eigenen Fahrzeug und dem vorausfahrenden Fahrzeug 28 erkannt. Hierbei wird auch der Freiraum neben der Fahrbahn in dem Bereich, den das Fahrzeug voraussichtlich befahren wird, beurteilt. In diesem Schritt kann auch der Fall abgedeckt werden, dass ein Hindernis 28b auf dem Randbereich 18 oder dem Übergang 16 existiert, mit dem das Fahrzeug beim Weiterfahren zu kollidieren droht. In diesem Fall sollte ein Manöver zum Verhindern einer Kollision sofort eingeleitet werden. Um einen solchen Fall zu berücksichtigen, können im Schritt S14 beispielsweise Hindernisse auf dem Randbereich 18 oder dem erkannten Übergang 16 markiert werden. Diese Markierung kann dann in den nachfolgenden Prüfschritten wie beschrieben ausgewertet werden, um das erforderlich Manöver zur Kollisionsvermeidung einzuleiten. Das Manöver kann hierbei darin bestehen, das Fahrzeug soweit wie möglich zu verzögern und dann mit reduzierter Geschwindigkeit auf die Fahrbahn zurückzuführen, ggf. an einer geeigneten Übergangsstelle, oder auch sofort zurückzuführen, insbesondere dann, wenn die Entfernung zum Hindernis 28b gering ist. Für alle anderen Fälle wird im Verfahrensablauf mit den im Folgenden beschriebenen Schritten fortgefahren.

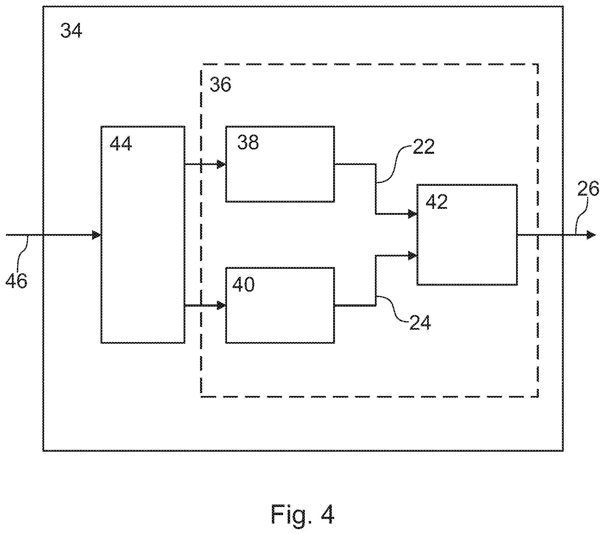

Im nun folgenden Schritt S16 wird der im Schritt S12 erkannte Übergang 16 hinsichtlich seiner Eignung für das Zurückführen des Fahrzeugs überprüft. Hierzu kann der Algorithmus verschiedene Bewertungskriterien heranziehen. Beispielsweise kann der Höhenunterschied zwischen dem Fahrbahn-Randbereich 18 und der eigentlichen Fahrbahn 12 und/oder die Breite des Übergangs 16 vermessen oder geschätzt werden. Für die Prüfung kann nun der Höhenunterschied bzw. die Breite mit einem Schwellwert verglichen werden, der beispielsweise abhängig von der Geschwindigkeit (hohe Geschwindigkeit: eher kleiner Schwellwert, niedrige Geschwindigkeit: eher größerer Schwellwert) und Fahrzeugeigenschaften (Gelände-/Strassenfahrzeug: eher größerer/niedriger Schwellwert, PKW/LKW, niedriger/hoher Fahrzeugschwerpunkt: eher niedriger/größerer Schwellwert) vorgegeben sein kann. Ergibt der Vergleich, dass der Höhenunterschied bzw. die Breite kleiner als der Schwellwert sind, wird dies entsprechend durch ein erstes Signal 22 (siehe Fig. 4) signalisiert (mit "Ja" bezeichnete Verzweigung). Andernfalls springt der Algorithmus zurück zum Schritt S10, in dem er wieder Daten der Umfeldsensoren empfängt (mit "Nein" bezeichnete Verzweigung).

Das erste Signal 22 kann beispielsweise bei der in Fig. 2 gezeigten Situation eine erste als unkritisch bewertete Übergangsstelle 30 und eines zweite als unkritisch bewertete Übergangsstelle 32 des Übergangs 16 ausgeben. Die Ausgabe der Stellen 30 und 32 kann eine geschätzte oder vermessene Position dieser Stellen aufweisen.

Im darauffolgenden Schritt S18 wird der im Schritt S14 erkannte Freiraum 20 hinsichtlich seiner Eignung für das Zurückführen des Fahrzeugs überprüft. Zunächst wird hierzu überprüft, ob der vermessene oder geschätzte Freiraum 20 überhaupt ausreicht, um das Fahrzeug ohne Kollision mit dem vorausfahrenden Fahrzeug 28 auf die Fahrbahn 12 zurückzuführen. Wird der Freiraum 20 als ausreichend für die Zurückführung bewertet, wird er im Zusammenhang mit den im vorhergehenden Schritt S16 erkannten und als unkritisch bewerteten Übergangsstellen 30 und 32 bewertet. Hierbei wird bei der in Fig. 2 dargestellten Situation ermittelt, dass der Freiraum 20 nur im Zusammenhang mit der Übergangsstelle 30 für ein Zurückführen geeignet ist, da sich die Übergangsstelle 32 auf der Höhe des vorausfahrenden Fahrzeugs 28 befindet und daher nicht für ein Zurückführen geeignet ist, da kein Freiraum an dieser Stelle vorhanden ist. Im Schritt S18 wird zudem überprüft, ob im vorherigen Schritt S14 Hindernisse wie der Leitpfoste 28b auf dem Randbereich 18 oder dem Übergang 16 markiert wurden. Ist dies der Fall, kann beurteilt werden, ob eine Kollision mit einem markierten Hindernis droht, insbesondere kann geschätzt werden, wann eine solche Kollision bei der aktuellen Geschwindigkeit drohen würde. Ergibt die Beurteilung, dass beispielsweise eine Kollision noch vor Erreichen der Übergangsstelle 30 droht, kann dies entsprechende signalisiert werden, um ein oben beschriebenes Manöver zu Kollisionsvermeidung einzuleiten. Als Ergebnis wird durch den Schritt S18 ein zweites Signal 24 erzeugt, das den Freiraum 20 als ausreichend für ein Zurückführen an der Übergangsstelle 30 signalisiert, oder signalisiert, dass sich Hindernisse auf dem Fahrbahn-Randbereich oder dem erkannten Übergang befinden. Daraufhin wird in den Schritt S20 verzweigt (mit "Ja" bezeichnete Verzweigung), in dem ein Rückführsignal 26 (siehe Fig. 4) für die Übergangsstelle 30 oder ein Rückführsignal 26 für eine Manöver zum Vermeiden einer drohenden Kollision mit einem dass sich auf dem Fahrbahn-Randbereich oder dem erkannten Übergang befindenden Hindernis erzeugt und ausgegeben wird. Anschließend springt der Algorithmus zurück zum Schritt S10, in dem er wieder Daten der Umfeldsensoren empfängt. Wird im Schritt S18 ermittelt, dass kein ausreichender Freiraum vorliegt, springt der Algorithmus unmittelbar zurück zum Schritt S10 ohne in den Schritt S20 zu verzweigen (mit "Nein" bezeichnete Verzweigung).

Die beiden Schritte S16 und S18 können auch parallel ablaufen und ihr Ergebnis direkt an den Schritt S20 weitergeben, der dann die vorstehend beschriebene Überprüfung des Freiraums 20 in Bezug auf die beiden Übergangsstellen 30 und 32 und/oder die Überprüfung auf Hindernisse 28b auf dem Fahrbahn-Randbereich 18 oder dem erkannten Übergang 16 durchführt und davon abhängig das Rückführsignal 26 erzeugt.

Fig. 4 zeigt ein Blockschaltbild einer Vorrichtung 34 zum Unterstützen des Zurückführens eines Fahrzeugs nach dem Verlassen einer Fahrbahn, die in Soft- und/oder Hardware implementiert sein kann. Beispielswiese kann die Vorrichtung als FPGA (Field Programable Gate Array) ausgebildet sein, der zum Ausführen eines Verfahrens zum Unterstützen des Zurückführens eines Fahrzeugs nach dem Verlassen einer Fahrbahn (wie beispielhaft durch das Ablaufdiagramm in Fig. 3 gezeigt) programmiert sein kann. Die Vorrichtung kann auch als Mikroprozessor oder -kontroller ausgebildet sein, der durch ein spezielles Programm, das ein Verfahren wie in Fig. 3 implementiert, konfiguriert sein kann. Weitere Mischformen einer Implementierung der Vorrichtung sind ebenso denkbar, beispielsweise indem besonders rechenintensive Teile des erfindungsgemäßen Verfahrens in Hardware, beispielsweise in Form von ASICs (Application Specific Integrated Circuits) und die übrigen Teile in Software implementiert sind, die von einem Standard-Mikroprozessor oder -kontroller ausgeführt werden.

Die in Fig. 4 gezeigte Vorrichtung 34 empfängt die Daten 46 von einem oder mehreren Umfeldsensoren des Fahrzeugs, die nach vorne gerichtet sind und einen Bereich vor dem Fahrzeug erfassen, wie es beispielsweise in Fig. 1 und 2 gezeigt ist. Im vorliegenden Fall soll es sich bei den empfangenen Daten um die Daten der als Umfeldsensor eingesetzten Kamera 14 von Fig. 1 handeln. Die empfangenen Kameradaten 46 werden zunächst einer Fahrbahn-Verlassens-Erkennungseinheit 44 zugeführt, die eine spezielle Bildauswertung mit den empfangen Kameradaten 46 ausführt, um festzustellen, ob das Fahrzeug die Fahrbahn verlassen wird, bereits von der Fahrbahn abgekommen ist und zumindest teilweise auf einem Fahrbahn-Randbereich fährt. Sofern die Einheit 44 feststellt, dass dies der Fall ist, übermittelt sie die empfangenen Kameradaten 46 an eine Auswerteeinheit 36 der Vorrichtung 34, die eine oder mehrere der folgenden Aufgaben übernimmt:
- Erkennen, ob ein Übergang zwischen dem Fahrbahn-Randbereich und der Fahrbahn, insbesondere ein Höhenunterschied zwischen dem Fahrbahn-Randbereich und der Fahrbahn, eine Gefahr darstellt.
- Erkennen und Bewerten des verfügbaren Freiraums vor dem Fahrzeug.
- Planen des bestmöglichen Manövers, z.B. Bremsen und mit geringer Geschwindigkeit über eine Kante zwischen dem Fahrbahn-Randbereich und der Fahrbahn fahren oder bis zu einer Stelle auf dem Bankett bzw. Fahrbahn-Randbereich bleiben, an der eine Stufe zwischen dem Fahrbahn-Randbereich und der Fahrbahn eine unkritische Höhe und Form hat.
- Autonomes Durchführen eines Manövers zum Zurückführen des Fahrzeugs auf die Fahrbahn, im dem die entsprechenden Lenkmomente und Beschleunigungen/Verzögerungen vom Fahrzeug angefordert werden, oder
- Unterstützen des Fahrers beim Lenken durch ein überlagertes Lenkmoment, das der Fahrer überstimmen kann, oder einen asymetrischen (z.B. einseitigen) Bremseingriff. Auch in dieser Ausprägung kann eine Beschleunigung/Verzögerung vom Fahrzeug angefordert werden. Diese Anforderung kann vom Fahrer aber überstimmt werden. Vorteil dieser Ausprägung sind die geringeren Sicherheitsanforderungen als bei einem autonomen Eingriff.

Zum Ausführen der obigen Aufgaben weist die Auswerteeinheit 36 eine Übergangs-Erkennungs- und Prüfeinheit 38, eine Freiraum-Erkennungs- und Prüfeinheit 40 und eine Rückführsignal-Erzeugungseinheit 42 auf. Die Übergangs-Erkennungs- und Prüfeinheit 38 implementiert hierbei die Schritte S12 und S16 des in Fig. 3 gezeigten Verfahrensablaufs und erzeugt das erste Signal 38, während die Freiraum-Erkennungs- und Prüfeinheit 40 im Wesentlichen die Schritte S14 und S18 ausführt und das zweite Signal 24 erzeugt.

Die Rückführsignal-Erzeugungseinheit 42 erzeugt aus den zugeführten Signalen das Rückführsignal 26. Hierzu kann die Rückführsignal-Erzeugungseinheit 42 entsprechend der von der Auswerteinheit 36 zu erfüllenden Aufgabe und gemäß vorgegebener Strategien das bestmögliche Manöver zum Zurückführen des Fahrzeugs auf die Fahrbahn planen und das Rückführsignal so erzeugen, dass es dementsprechende Information für einen (teil)autonomen Eingriff in die Lenkung und/oder Antriebssteuerung des Fahrzeugs aufweist.

Beispielsweise kann in der in Fig. 2 dargestellten Situation für einen autonomen Eingriff das Rückführsignal Informationen zum Verringern der Geschwindigkeit des Fahrzeugs vor der Position der Übergangsstellte 30 und Informationen zum Erzeugen von Lenkmomenten an der Position der Übergangsstelle 30 aufweisen, die das Fahrzeug an der Übergangsstellte 30 autonom vom Fahrbahn-Randbereich 18 zurück auf die Fahrbahn 12 lenken.

Für einen teilautonomen Eingriff kann das Rückführsignal Informationen für einen einseitigen Bremseingriff auf der linken Fahrzeugseite vor der Position der Übergangsstelle 30 und zum Aufbringen eines überlagerten Lenkmoments an der Übergangsstelle 30 aufweisen, damit der Fahrer darauf aufmerksam gemacht wird, das Fahrzeug an der Stelle 30 nach links zurück auf die Fahrbahn 12 zu lenken.

In einer besonders einfachen Ausführung kann das Rückführsignal auch lediglich als rein passives Unterstützungssignal für den Fahrer dienen, das bei Erreichen der Stelle 30 dem Fahrer signalisiert, akustisch und/oder visuell und/oder haptisch, dass nun eine geeignete Position zum Zurückführen des Fahrzeugs auf die Fahrbahn 12 erreicht ist.

Die vorliegende Erfindung ermöglicht es, einen Fahrer beim Zurückführen eines Fahrzeugs nach dem Verlassen einer Fahrbahn zu unterstützen, wenn das Fahrzeug zumindest teilweise auf dem Fahrbahn-Randbereich bzw. dem Bankett fährt. Hierzu wertet die Erfindung Daten eines oder mehrerer Umfeldsensoren aus, welche den Bereich vor dem Fahrzeug erfassen, und erzeugt als Ergebnis der Auswertung ein Rückführsignal, das entweder zum Signalisieren einer geeigneten Stelle zum Zurückführen des Fahrzeugs an den Fahrer oder zum Steuern eines (teil)autonomen Eingriffs in die Antriebssteuerung und/oder Lenkung des Fahrzeugs verwendet werden kann. Gegenüber dem Stand der Technik bietet die Erfindung den Vorteil, dass ein Fahrer in einer Stresssituation entlastet wird, das Fahrzeug in einem stabilen Zustand bleibt und somit Unfälle oder auch nur Schäden am Fahrzeug wie Reifendefekte verhindert werden können.

### Bezugszeichen

- 10: Fahrzeug
- 12: Fahrbahn
- 14: Kamera
- 15: Erfassungsbereich der Kamera
- 16: Übergang zwischen Fahrbahn und Fahrbahn-Randbereich
- 18: Fahrbahn-Randbereich
- 20: Freiraum
- 22: erstes Signal
- 24: zweites Signal
- 26: Rückführsignal
- 28: vorausfahrendes Fahrzeug
- 28b: Leitpfosten
- 30: erste als unkritisch bewertete Übergangsstelle
- 32: zweite als unkritisch bewertete Übergangsstelle
- 34: Zurückführungs-Unterstützungsvorrichtung
- 36: Auswerteeinheit
- 38: Übergangs-Erkennungs- und Prüfeinheit
- 40: Freiraum-Erkennungs- und Prüfeinheit
- 42: Rückführsignal-Erzeugungseinheit
- 44: Fahrbahn-Verlassens-Erkennungseinheit
- 46: Kameradaten

## Patentansprüche

1. Verfahren zum Unterstützen des Zurückführens eines Fahrzeugs (10) nach dem Verlassen einer Fahrbahn (12) mit den folgenden Schritten:
- Empfangen von Daten eines oder mehrerer Umfeldsensoren (14) des Fahrzeugs, welche die Fahrbahn in einem Bereich vor dem Fahrzeug erfassen (S10),
- Auswerten der empfangenen Daten zum Erkennen eines Übergangs (16) zwischen der Fahrbahn und einem Fahrbahn-Randbereich (18; S12), wobei das Auswerten das Erkennen eines Höhenunterschieds zwischen dem Fahrbahn-Randbereich und der Fahrbahn und/oder einer Breite des Fahrbahn-Randbereichs aufweist,
- Auswerten der empfangenen Daten zum Erkennen eines Freiraums (20) vor dem Fahrzeug (S14),
- Prüfen, ob der erkannte Übergang für ein Zurückführen des Fahrzeugs auf die Fahrbahn unkritisch ist und Ausgeben eines entsprechenden ersten Signals (22; S16), wobei das Prüfen aufweist, ob mindestens der erkannte Höhenunterschied oder die erkannte Breite kleiner als ein vorgegebener Schwellwert ist,
- Prüfen, ob der erkannte Freiraum für ein Zurückführen des Fahrzeugs ausreichend ist und Ausgeben eines entsprechenden zweiten Signals (24; S18), und
- Erzeugen eines Rückführsignals (26), wenn das erste Signal signalisiert, dass der erkannte Übergang unkritisch ist, und das zweite Signal signalisiert, dass der Freiraum ausreichend ist.

2. Verfahren nach Anspruch 1,
**dadurch gekennzeichnet, dass**
das Prüfen, ob der erkannte Übergang für ein Zurückführen des Fahrzeugs auf die Fahrbahn unkritisch ist, folgendes aufweist:
- Klassifizieren des erkannten Übergangs hinsichtlich seines Einflusses auf die Fahrstabilität beim Überfahren durch das Fahrzeug und
- Ausgeben des ersten Signals, wenn der Übergang mit einem geringeren Einfluss auf die Fahrstabilität beim Überfahren als ein vorgegebener maximaler Einfluss klassifiziert ist.

3. Verfahren nach Anspruch 1 oder 2,
**dadurch gekennzeichnet, dass**
abhängig vom Rückführsignal ein Lenkunterstützungssignal, ein Bremseingriffssignal und/oder ein Beschleunigungssignal erzeugt und ausgegeben wird bzw. werden.

4. Verfahren nach Anspruch 1, 2,oder 3,
**dadurch gekennzeichnet, dass**
die von dem oder den Umfeldsensoren empfangenen Daten Informationen zum Erkennen und Bewerten einer Oberflächenkontur des Untergrunds vor dem Fahrzeug und des Freiraums vor dem Fahrzeug aufweisen.

5. Vorrichtung zum Unterstützen des Zurückführens eines Fahrzeugs nach dem Verlassen einer Fahrbahn mit einer Auswerteeinheit, die ausgebildet ist zum
- Empfangen von Daten eines oder mehrerer Umfeldsensoren des Fahrzeugs, welche die Fahrbahn in einem Bereich vor dem Fahrzeug erfassen,
- Auswerten der empfangenen Daten zum Erkennen eines Übergangs zwischen der Fahrbahn und einem Fahrbahn-Randbereich, wobei das Auswerten das Erkennen eines Höhenunterschieds zwischen dem Fahrbahn-Randbereich und der Fahrbahn und/oder einer Breite des Fahrbahn-Randbereichs aufweist,
- Auswerten der empfangenen Daten zum Erkennen eines Freiraums vor dem Fahrzeug,
- Prüfen, ob der erkannte Übergang für ein Zurückführen des Fahrzeugs auf die Fahrbahn unkritisch ist, wobei das Prüfen aufweist, ob mindestens der erkannte Höhenunterschied oder die erkannte Breite kleiner als ein vorgegebener Schwellwert ist und Ausgeben eines entsprechenden ersten Signals,
- Prüfen, ob der erkannte Freiraum für ein Zurückführen des Fahrzeugs ausreichend ist und Ausgeben eines entsprechenden zweiten Signals, und
- Erzeugen eines Rückführsignals, wenn das erste Signal signalisiert, der erkannte Übergang unkritisch ist, und das zweite Signal signalisiert, dass der Freiraum ausreichend ist.

6. Vorrichtung nach Anspruch 5,
**dadurch gekennzeichnet, dass**
die Auswerteeinheit ferner ausgebildet ist, ein Verfahren nach einem der Ansprüche 1 bis 4 auszuführen.

7. Fahrerassistenzsystem mit einer Vorrichtung nach Anspruch 5 oder 6.

8. Fahrerassistenzsystem nach Anspruch 7,
**dadurch gekennzeichnet, dass**
es eine Signalisierungsvorrichtung aufweist, die einem Fahrer ein erzeugtes Rückführsignal signalisiert.

9. Fahrerassistenzsystem nach Anspruch 7,
**dadurch gekennzeichnet, dass**
es ferner ausgebildet ist, abhängig vom Rückführsignal Steuersignale für die Antriebssteuerung und/oder Lenkung eines Fahrzeugs derart zu erzeugen, dass die Antriebssteuerung bzw. Lenkung das Fahrzeug teilautonom oder autonom auf eine Fahrbahn zurückführt.

## Claims

1. A method for supporting the return of a vehicle (10) after leaving a lane (12), involving the following steps:
- receiving data from one or a plurality of surroundings sensors (14) of the vehicle which detect the lane in a region in front of the vehicle (S10),
- evaluating the received data in order to recognise a transition (16) between the lane and a lane-edge region (18; S12), wherein the evaluating includes the recognising of a height difference between the lane-edge region and the lane and/or a width of the lane-edge region,
- evaluating the received data in order to recognise a free area (20) in front of the vehicle (S14),
- testing whether the recognised transition is not critical for a return of the vehicle to the lane and emitting a corresponding first signal (22; S16), wherein the testing includes whether at least the recognised height difference or the recognised width is smaller than a predefined threshold,
- testing whether the recognised free area is sufficient for a return of the vehicle and emitting a corresponding second signal (24; S18), and
- generating a return signal (26) if the first signal indicates that the recognised transition is not critical, and if the second signal indicates that the free area is sufficient.

2. The method according to Claim 1,
**characterised in that**
the testing whether the recognised transition is not critical for a return of the vehicle to the lane includes the following:
- classifying the recognised transition with respect to its influence on the driving stability when it is driven over by the vehicle, and
- emitting the first signal if the transition having a lesser influence on the driving stability when it is driven over is classified as a predefined maximum influence.

3. The method according to Claim 1 or 2,
**characterised in that**
depending on the return signal a steering assistance signal, a braking intervention signal and/or an acceleration signal is or respectively are generated and output.

4. The method according to Claim 1, 2, or 3,
**characterised in that**
the data received by the surroundings sensor(s) have information for recognising and evaluating a surface contour of the ground in front of the vehicle and the free space in front of the vehicle.

5. A device for supporting the return of a vehicle after leaving a lane, having an evaluation unit which is configured to
- receive data from one or a plurality of surroundings sensors of the vehicle which detect the lane in a region in front of the vehicle,
- evaluate the received data in order to recognise a transition between the lane and a lane-edge region, wherein the evaluating includes the recognising of a height difference between the lane-edge region and the lane and/or a width of the lane-edge region,
- evaluate the received data in order to recognise a free area in front of the vehicle,
- test whether the recognised transition is not critical for a return of the vehicle to the lane, wherein the testing includes whether at least the recognised height difference or the recognised width is smaller than a predefined threshold, and to emit a corresponding first signal,
- test whether the recognised free area is sufficient for a return of the vehicle and emit a corresponding second signal, and
- generate a return signal if the first signal indicates that the recognised transition is not critical, and if the second signal indicates that the free area is sufficient.

6. The device according to Claim 5,
**characterised in that**
the evaluation unit is further configured to carry out a method according to any one of Claims 1 to 4.

7. A driver assistance system having a device according to Claim 5 or 6.

8. The driver assistance system according to Claim 7,
**characterised in that**
it has a signalling device which indicates a generated return signal to a driver.

9. The driver assistance system according to Claim 7,
**characterised in that**
it is further configured, depending on the return signal, to generate control signals for the drive control and/or steering of a vehicle in such a manner that the drive control or respectively steering returns the vehicle partially autonomously or autonomously to a lane.

## Revendications

1. Procédé permettant d'assister le renvoi d'un véhicule (10) après avoir quitté une chaussée (12), avec les étapes suivantes :
- réception de données d'un ou plusieurs capteurs d'environnement (14) du véhicule, lesquels enregistrent la chaussée dans une zone devant le véhicule (S10),
- évaluer les données reçues pour la détection d'une zone intermédiaire (16) entre la chaussée et une zone de bord de chaussée (18 ; S12), l'évaluation comprenant la détection d'une différence de hauteur entre la zone de bord de chaussée et la chaussée et/ou une largeur de la zone de bord de chaussée,
- évaluer les données reçues pour la détection d'un espace libre (20) devant le véhicule (S14),
- vérifier si la zone intermédiaire détectée est non critique pour un renvoi du véhicule sur la chaussée et émettre un premier signal correspondant (22 ; S16), la vérification indiquant si au moins la différence de hauteur détectée ou la largeur détectée est inférieure à une valeur seuil spécifiée,
- vérifier si l'espace libre détecté est suffisant pour un renvoi du véhicule et émettre un deuxième signal correspondant (24 ; S18), et
- générer un signal de renvoi (26) lorsque le premier signal indique que la zone intermédiaire détectée est non critique et que le deuxième signal indique que l'espace libre est suffisant.

2. Procédé selon la revendication 1,
**caractérisé en ce que**
la vérification de savoir si la zone intermédiaire détectée est non critique pour un renvoi du véhicule sur la chaussée comprend les éléments suivants :
- classer la zone intermédiaire détectée relativement à son influence sur la stabilité de conduite lors de la traversée par le véhicule, et
- émettre le premier signal lorsque la zone intermédiaire est classée comme ayant une influence sur la stabilité de conduite lors de la traversée inférieure à une influence maximale spécifiée.

3. Procédé selon la revendication 1 ou 2,
**caractérisé en ce qu'**
un signal d'assistance de direction, un signal d'intervention de freinage et/ou un signal d'accélération est ou sont généré(s) et émis en fonction du signal de renvoi.

4. Procédé selon la revendication 1, 2 ou 3,
**caractérisé en ce que**
les données reçues par le ou les capteur(s) d'environnement comprennent des informations pour la détection et l'évaluation d'un contour de surface du sol devant le véhicule et de l'espace libre devant le véhicule.

5. Dispositif permettant d'assister le renvoi d'un véhicule après avoir quitté une chaussée avec une unité d'évaluation, formé pour :
- recevoir des données d'un ou plusieurs capteurs d'environnement du véhicule, lesquels enregistrent la chaussée dans une zone devant le véhicule,
- évaluer les données reçues pour la détection d'une zone intermédiaire entre la chaussée et une zone de bord de chaussée, l'évaluation comprenant la détection d'une différence de hauteur entre la zone de bord de chaussée et la chaussée et/ou une largeur de la zone de bord de chaussée,
- évaluer les données reçues pour la détection d'un espace libre devant le véhicule,
- vérifier si la zone intermédiaire détectée est non critique pour un renvoi du véhicule sur la chaussée, la vérification indiquant si au moins la différence de hauteur détectée ou la largeur détectée est inférieure à une valeur seuil spécifiée, et émettre un premier signal correspondant,
- vérifier si l'espace libre détecté est suffisant pour un renvoi du véhicule et émettre un deuxième signal correspondant, et
- générer un signal de renvoi lorsque le premier signal indique que la zone intermédiaire détectée est non critique et que le deuxième signal indique que l'espace libre est suffisant.

6. Dispositif selon la revendication 5,
**caractérisé en ce que**
l'unité d'évaluation est formée en outre afin d'exécuter un procédé selon l'une des revendications 1 à 4.

7. Système d'aide à la conduite avec un dispositif selon la revendication 5 ou 6.

8. Système d'aide à la conduite selon la revendication 7,
**caractérisé en ce que**
celui-ci comprend un dispositif de signalisation, lequel émet pour le conducteur un signal de renvoi généré.

9. Système d'aide à la conduite selon la revendication 7,
**caractérisé en ce que**
celui-ci est formé en outre pour générer des signaux de commande pour la commande d'entraînement et/ou la direction d'un véhicule de telle sorte que la commande d'entraînement ou la direction renvoie le véhicule de façon partiellement autonome ou autonome sur une chaussée, en fonction du signal de renvoi.
